# EUROPEAN PATENT SPECIFICATION

(11) **EP 1 564 106 B1**
(45) Date of publication and mention of the grant of the patent: **28.05.2008**
(21) Application number: 04003052.0
(22) Date of filing: 11.02.2004
(51) Int. Cl.: B62B 7/06

(54) **Locking mechanism for frame unit**
Schliessmechanismus für Rahmen
Mécanisme de verrouillage pour cadre

(43) Date of publication of application: 17.08.2005
(73) Proprietor: Excellerate Enterprise Co., Ltd., Songshan District Taipei 105 (TW)
(72) Inventor: Chen, Jui-Lung, Kushan District Kaohsiung (TW)
(74) Representative: Banzer, Hans-Jörg

(56) References cited:
- EP-A- 1 232 927
- DE-A- 19 852 050
- DE-U- 9 318 000

## Description

### Field of the Invention

The present invention relates generally to a locking mechanism or locking means for a frame unit, and more particularly to a locking mechanism for a frame unit with a secondary safety lock.

### Background of the Invention

As shown in Fig. 1, the locking mechanism disclosed in European Patent No. 1,232,927 A2 has a lever 9a pivotally connected to an oblong portion 8b at an upper end, and a tooth 9b of the lever 9a at a lower end is engaged into a recess of a crusor 5k to maintain the frames of a stroller with an umbrella at a stretched state. When it is desired to fold the stroller with an umbrella, the lever 9a is pivoted upwardly to make the tooth 9b escape from the recess 85 so that the crusor 5k is movable and the frame can be collapsed.

However, since the fulcrum is pivoted at the upper end of the lever 9a, the only way about folding operation is to pivot the lever 9a upwardly. Furthermore, for the reason that the oblong portion 8b which is pivotally connected with upper bars 6a' and 6b' can not be moved up and down, once a button 9c is accommodated in a notch 8c, it is difficult to release the engagement between the button 9c and the notch 8c. Therefore, the lever 9a is difficult to be pivoted again and thus the crusor 5k is also difficult to be separated from the tooth 9b to fold the frames.

In addition, the locking mechanism disclosed in Figs. 25-27 of EP 1 232 927 A2 is not equipped with a safety lock. Hence, if the locking mechanism is mistakenly operated when the child is sitting in the stroller, the stroller may be collapsed and thus the child will be squeezed therein.

Another prior art was disclosed in DE 93 18 000 U, which describes a locking mechanism 1' connected with a handle bar 2', a front wheel rod 3', and a rear wheel rod 4'. However, the locking mechanism 1' can only control the relative sliding motion between the handle bar 2' and the front wheel rod 3'. There is no function for the locking mechanism 1' to hold the front wheel rod 3' and a rear wheel rod 4' at a stretched state or to release the front wheel rod 3' and a rear wheel rod 4' at a foldable state.

### Summary of the Invention

An object of the present invention is the provision of a locking mechanism for a frame unit having safety lock.

Additional features and advantages of the invention will be set forth in the description which follows, and in portion will be apparent from the description, or may be learned by practice of the invention. The objectives and advantages of the invention will be realized and attained by the structure particularly pointed out in the written description and claims hereof as well as the appended drawings.

According to the invention, the above objects are achieved by a locking mechanism as defined by claim 1. The dependent claims define preferred and advantageous embodiments of the invention.

To achieve these and other advantages and according to the purpose of the present invention, as embodied and broadly described, a locking mechanism for a frame unit, provided for connecting to the frame unit which has at least a first rod and at least a second rod, comprises: a base pivotally connected with the at least the first rod of the frame unit; a slide pivotally connected with the at least the second rod of the frame unit; a pivoting member having opposite two ends, a pivoting portion between the two ends, and a protuberance at one of the two ends, the pivoting portion pivotally connecting with the base and the protuberance being provided to lock the slide so as to secure the slide near the base and hold the at least the first rod and the at least the second rod of the frame unit at a stretched state; and a flexible member provided between the pivoting member and the base to recover the pivoting member; wherein when a force is exerted at one end of the pivoting member, the pivoting member is pivotally rotated relative to the pivoting portion so that the protuberance of the pivoting member is separated from the slide to allow the slide moving relative to the base, which make the frame unit, the at least the first rod, and the at least the second rod in a foldable state.

According to the invention the locking mechanism further has a blocking member in the base for contacting with the pivoting member to prevent the pivoting member from separating from the slide.

It is preferred that the blocking member has two elastic arms and the base has two inclined surfaces respectively contacting with the two elastic arms to recover the blocking member.

It is preferred that the locking mechanism further has a restricting member and the blocking member further has an elongated hole for receiving the restricting member which restricts the blocking member and the flexible member within a range.

It is preferred that the locking mechanism further has a handle provided at the pivoting member and when a force is applied to the handle, the protuberance is separated from the slide.

It is preferred that the frame unit further comprises a guiding rod connected to the base to guide the motion of the slide.

It is preferred that the frame unit further comprises a pedal assembly provided at one end of the guiding rod to facilitate stretching the frame unit.

It is preferred that the frame unit further comprises at least a third rod to connect the guiding rod and the at least the second rod.

It is preferred that the frame unit further comprises a rod assembly connecting the at least the first rod and the at least the second rod.

It is preferred that the base has a slit for accommodating the guiding rod.

It is preferred that the slide has a tunnel for accommodating the guiding rod.

It is preferred that the base has at least a slot for accommodating the at least the first rod.

It is preferred that the slide has at least a flute for accommodating the at least the second rod.

It is to be understood that both the forgoing general description and the following detailed description are exemplary and explanatory and are intended to provide further explanation of the invention as claimed.

### Brief Description of the Drawings

The accompanying drawings, which are included to provide a further understanding of the invention and are incorporated in and constitute a portion of the specification, illustrate embodiments of the invention and together with the description serve to explain the principle of the invention. In the drawings:

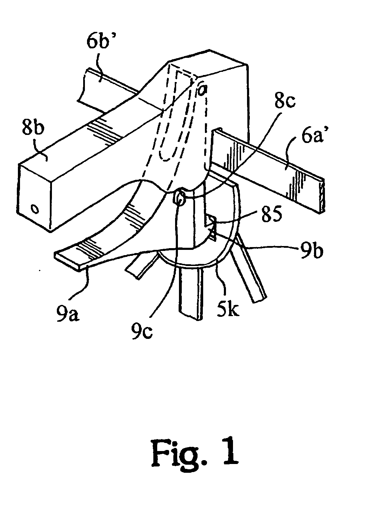

Fig. 1 is a schematic view illustrating a conventional locking mechanism;
Fig. 2 is an assembled perspective view of the locking mechanism and the frame unit according to the present invention, illustrating the frame unit is locked at a stretched state by the locking mechanism;
Fig. 3 is an exploded perspective view of the locking mechanism according to the present invention;
Fig. 4 is an assembled perspective view of the locking mechanism and the frame unit according to the present invention, illustrating the locking means is released so that the frame unit is at a foldable state;
Fig. 5 is a partially sectional view taken along the line IV-IV in Fig. 2, illustrating the frame unit is locked at a stretched state by the locking mechanism;
Fig. 6 is a partially sectional view taken along the line V-V in Fig. 4, illustrating the locking mechanism is released so that the frame unit is at a foldable state.

### Detailed Description of the Invention

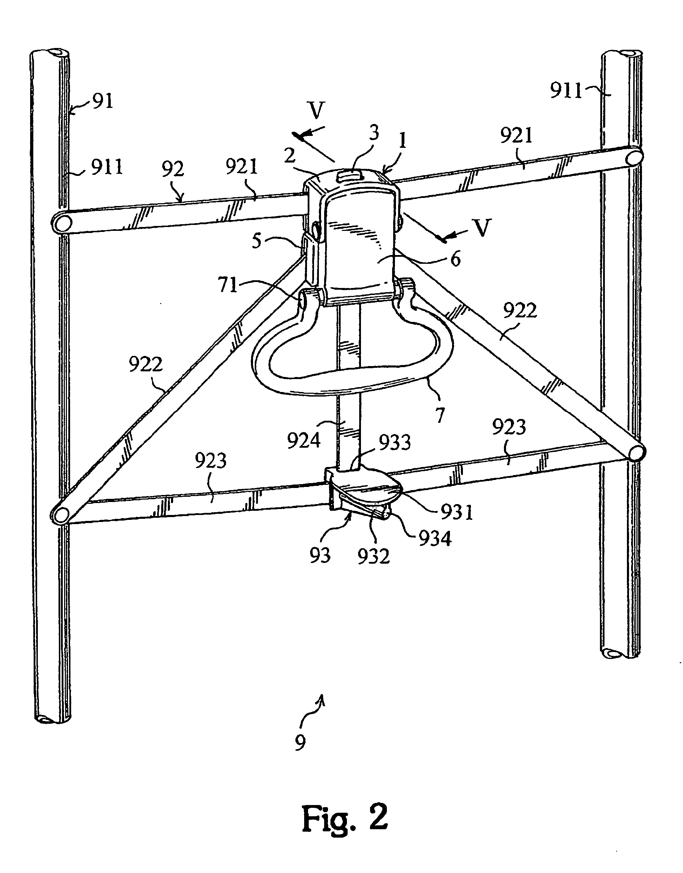

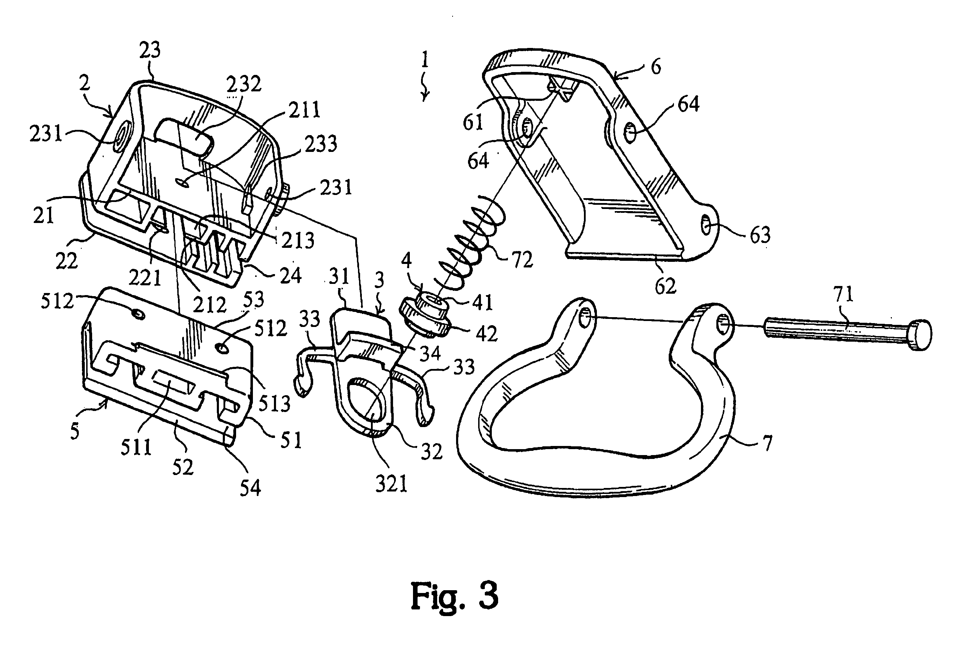

As shown in Figs. 2 and 3, a locking mechanism (or locking means) 1 of a frame unit 9 comprises a rectangular base 2, a blocking member 3, a wheel-shaped restricting member 4, a rectangular slide 5, a cover-like pivoting member 6, and a handle 7.

The base 2 includes a first board 21, a second board 22 parallel to the first board 21, a U-shaped bridge board 23 connecting with the first board 21 and the second board 22, and a slot 24 defined by the first board 21 and the second board 22 and situated at three end surfaces of the first board 21 and the second board 22.

The first board 21 has an aperture 211 formed at the center thereof, two L-shaped ribs 212 near a surface of the second board 22, and a slit 213 defined by the two ribs 212. The bridge board 23 has two aligned holes 231 respectively placed on the two opposite surfaces extending away from the first board, an opening 232 situated on the third surface, and two wedges, only one of which is shown in Fig. 3. The two wedges respectively have an inclined surface 233. The two inclined surfaces 233 is spaced farther at the end near the opening 232 than the end away from the opening 232. The second board 22 has a bore 221 aligned with the aperture 211 of the first board 21.

The slide 5 includes a first plate 51, a second plate 52 parallel to the first plate 51, a bridge plate 53 connecting the first plate 51 and the second plate 52, and a flute 54 defined by the first plate 51 and the second plate 52 and situated at three end surfaces of the first plate 51 and the second plate 52.

The first plate 51 has a tunnel 511 defined by ribs on the surface near the second plate 52, two eyelets 512 whose central line is perpendicular to the axis of the tunnel 511, and a ledge 513 on the surface away from the second plate 52.

The pivoting member 6 includes a perpendicular protrusion 61 at one end thereof, a perpendicular protuberance 62 at another end thereof, and a pivoting portion 64 constructed by two pivotal holes respectively situated at two sides of the pivoting member 6 near the middle part thereof

The blocking member 3 includes a head 31, a tail 32 opposite to the head 31, two L-shaped elastic arms 33 perpendicularly protruding respectively from two sides thereof between the head 31 and the tails 32, a projection 34 perpendicular to the head 31 and the arms 33 between the head 31 and the tails 32. The tail 32 has an elongated hole 321.

The restricting member 4 has an axial orifice 41 and a ring 42 around the circumference. The orifice 41 has different diameters at two opposite sections and a step (not shown) is formed at the intersection of the two sections.

A pin 71 is pass through the two end holes of the handle 7 and the performation 63 of the pivoting member 6 to pivotally connect the handle 7 to the pivoting member 6. Next, the blocking member 3 is installed into the base 2 in the manner that the head 31 of the blocking member 3 protrudes out of the opening 232 and the two arms 33 are respectively against the inclined surfaces 233 of the wedges in the base 2. Then, the restricting member 4 is inserted at one end thereof into the elongated hole 321 of the blocking member 3 and a flexible member 72 such as a spring is bushed around another end of the restricting member 4. After that, a rivet (not shown) is passed through the hole 231 of the base 2 and the pivotal holes 64 of the pivoting member 6 to pivotally connect the sub-assembly of the pivoting member 6 and the handle 7 to the base 2. At this state, another end of the flexible member 72 is just bushed around the protrusion 61 of the pivoting member 6. Finally, the slide 5 is placed under the base 2 and by means that the force of restoration of the flexible member 72 situated at one end of the pivoting member 6 together with the abutment of the projection 34 of the locking member 3 against upper end of the pivoting member 6, the protuberance 62 situated at another end of the pivoting member 6 hooks onto the lower surface of the ledge 513 of the slide 5 to secure the slide 5 and to completely construct the locking means 1 for the frame unit 9 according to the present invention.

On the other hand, the frame unit 9 applied together with the locking means 1 comprises a strut assembly 91, a rod assembly 92, and a pedal assembly 93.

The strut assembly 91 includes a plurality of struts 911, which parallel to , inclined, or crossed each other to construct a stroller or a push-chair with a canopy (not shown), but only two struts 911 are shown in this embodiment.

The rod assembly 92 includes two first rods 921, two second rods 922, two third rods 923, and a guiding rod 924.

The pedal assembly 93 has a pedal body 931 and a collar 932 integrated with the pedal body 931. The pedal body 931 further has a recess 933 at the front end thereof and the collar 932 further has a howe 934 at the center thereof.

The two first rods 921 at one end thereof are respectively connected pivotally to the two struts 911 by a rivet. Another ends of the two first rods 921 are respectively inserted into the slot 24 from two sides of the base 2 and one end of the guiding rod 924 is inserted into the slit 213 of the base 2. Next, a rivet (not shown) is sequentially passed through the orifice 41 of the restricting member 4, the aperture 211 of the first board 21, the one end of the guiding rod 924, the another ends of the two first rods 921, and the bore 221 of the second board 22 and then the members mentioned above are pivotally connected together.

One ends of two second rods 922 are respectively inserted into the flute 54 of the slide 5, and then pivotally connected to the slide 5 respectively at the eyelets 512 by a rivet. The another end of the guiding rod 924 is previously passed through the tunnel 511 of the slide 5 and the recess 933 of the pedal body 931, and then a rivet is sequentially passed through the howe 934 of the collar 932, the another end of the guiding rod 924, and the another ends of the third rods 923 in order to pivotally connect the pedal assembly 93, the guiding rod 924, and the third rods 923 together. Finally, the another end of each the second rod 922 and each the third rod 923 are pivotally connected to each the strut 911 respectively by a rivet.

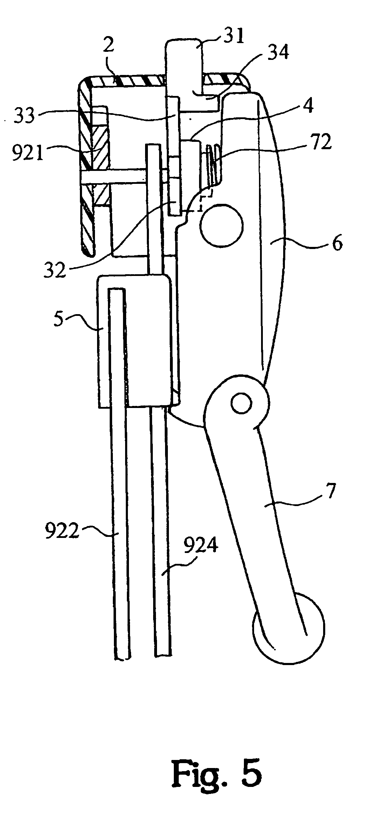

As shown in Figs. 2 and 5, when the slide 5 is situated at the upper end (upper dead point) of the guiding rod 924 and near the base 2, the rods 921, 922, and 923 are stretched, wherein the first rods 921 and the third rods 923 are substantially horizontal but a little bit of inclination down. By means of the arrangement of the rods 921, 922, and 923, the strut assembly 91 or even the entire frame unite 9 is sufficient to be automatically held at the stretched state. Therefore, the protuberance 62 of the pivoting member 6 usually locking at the slide 5 by the aid of the flexible member 72 is served as a secondary safety lock which can prevent the slide 5 from departing from the upper end point of the guiding rod 924 to unexpectedly fold the rod assembly 92 and the frame unit 9 when the frame unit 9 is suffered an incidental force.

Furthermore, because the elastic arms 33 of the blocking member 3 respectively abut against the inclined surfaces 233 of the wedges of the base 2, each forces exerted on the arm 33 applied by the inclined surface 233 is analyzed into a component of force compressing the elastic arm 33 and another component of force pushing up the blocking member 3 so that the blocking member is usually maintain at the uppermost position. In this state, the projection 34 of the blocking member 3 is just against the upper end of the pivoting member 6 to obstacle the upper section of the pivoting member 6 from swinging into the base 2. Hence, although the pivoting member is even mistakenly pressed or the handle 7 is mistakenly pulled up, the pivoting member 6 still cannot be pivotally rotated. Namely, the slide 5 is firmly locked by the pivoting member 6 and the frame unit 9 cannot be collapse. Therefore, the slide 5 has the function as a third safety lock.

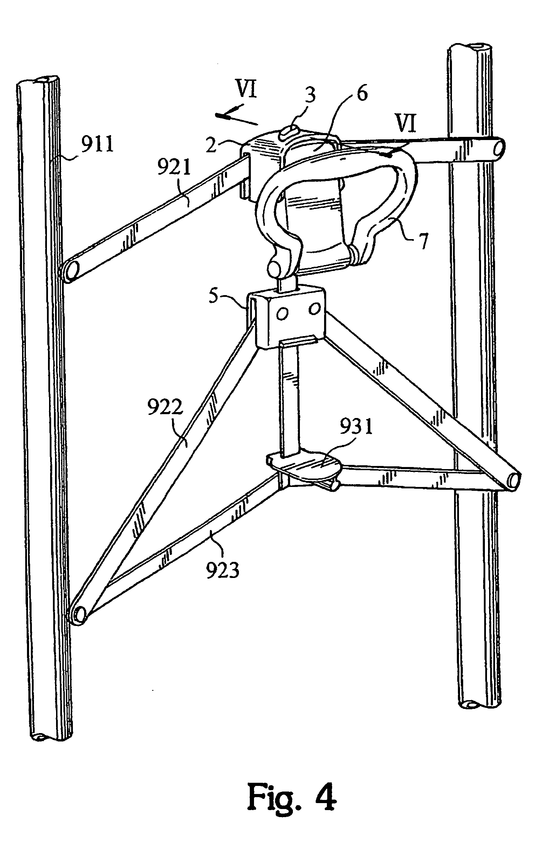

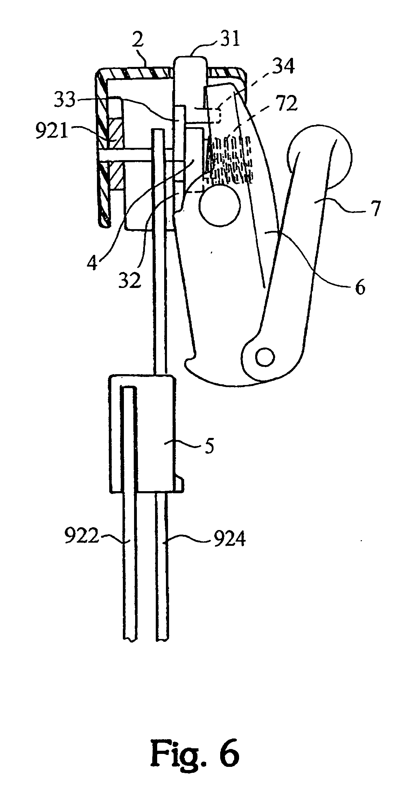

As shown in Figs. 4 and 6, when the frame unit 9 is desired to be fold, at first the blocking member 3 has to be pressed down to separate the projection 34 from the upper end of the pivoting member 6. In this state, the restricting member 4 may abuts against the upper edge of the circumference of the elongated hole 321, which enables the restricting member 4 to prevent the blocking member 3 from being excessively pressed down. Furthermore, the upper end of the pivoting member 6 is pressed or the handle 7 is pulled upward with one hand, both of which can pivotally rotate the pivoting member 6 to separate the protuberance 62 from the ledge 513 and release the engagement of the pivoting member 6 and the slide 5. Then by pushing up the first rod 921 with another hand, the state of the rod assembly 92 or the slide 5 situating at the upper dead point is released and the slide 5 is moved down and runs away from the base 2 along the guiding bar 924 to fold the frame unit 9. When the hand pressing on the blocking member 3 and the pivoting member 6 is removed, the pivoting member 6 is recovered to the previous state by the restoration force of the flexible member 72. Simultaneously, the blocking member 3 is recovered to the state prior to be pressed by the component of force upwardly exerted on the elastic arms 33 applied by the inclined surfaces 233 of the wedges.

When the frame unit 9 is desired to be stretched again, the struts 911 may be oppositely pulled out each other by both hands in order to make the slide move upwardly to the extent that the ledge 513 is held by the protuberance 62 so that the pivoting member 6 is engaged with the slide 5. Alternatively, the pedal body 931 may be stepped on by one foot and the struts 911 may be oppositely pulled out each other by both hands, which is more easy to stretch the frame unit 9.

This invention has been disclosed in terms of specific embodiments. It will be apparent that many modifications can be made to the disclosed structures without departing from the invention. Therefore, it is the intent of the appended claims to cover all such variations and modifications as come within the breadth and scope of this invention.

## Claims

1. A frame unit (9) with a locking mechanism (1), the frame unit (9) having at least a first rod (921) and at least a second rod (922), the locking mechanism (1) comprising:
a base (2) pivotally connected with the first rod (921) of the frame unit (9);
a pivoting member (6) having opposite two ends, a pivoting portion (64) between the two ends, and a protuberance (62) at one of the two ends, the pivoting portion (64) pivotally connecting with the base (2); and
a flexible member (72) provided between the pivoting member (6) and the base (2) to recover the pivoting member (6);
a slide (5) is pivotally connected with the second rod (922) of the frame unit (9); and
the protuberance (62) is provided to lock the slide (5) so as to secure the slide (5) near the base (2) and hold the first rod (921) and the second rod (922) of the frame unit (9) at a stretched state,
**characterized in that**
a blocking member (3) is arranged in the base (2) for contacting with the pivoting member (6) to prevent the pivoting member (6) from separating from the slide (5);
wherein when the blocking member (3) is moved relative to the pivoting member (6) and a force is exerted at one end of the pivoting member (6), the pivoting member (6) is pivotally rotated relative to the pivoting portion (64) so that the protuberance (62) of the pivoting member (6) is separated from the slide (5) to allow the slide (5) moving relative to the base (2), which make the frame unit (9), the first rod (921), and the second rod (922) in a foldable state.

2. The frame unit (9) with the locking mechanism (1) as claimed in claim 1, wherein the blocking member (3) has two elastic arms (33) and the base (2) has two inclined surfaces (233) respectively contacting with the two elastic arms (33) to recover the blocking member (3).

3. The frame unit (9) with the locking mechanism (1) as claimed in claim 1 or claim 2, wherein the locking mechanism (1) further has a restricting member (4) and the blocking member (3) further has an elongated hole (321) for receiving the restricting member (4) which restricts the blocking member (3) and the flexible member (72) within a range.

4. The frame unit (9) with the locking mechanism (1) as claimed in any one of claims 1-3, wherein the locking mechanism (1) further has a handle (7) provided at the pivoting member (6) and when a force is applied to the handle (7), the protuberance (62) is separated from the slide (5).

5. The frame unit (9) with the locking mechanism (1) as claimed in any one of claims 1-4, wherein the frame unit (9) further comprises a guiding rod (924) connected to the base (2) to guide the motion of the slide (5).

6. The frame unit (9) with the locking mechanism (1) as claimed in claim 5, wherein the frame unit (9) further comprises a pedal assembly (93) provided at one end of the guiding rod (924) to facilitate stretching the frame unit (9).

7. The frame unit (9) with the locking mechanism (1) as claimed in claim 5 or claim 6, wherein the frame unit (9) further comprises at least a third rod (923) to connect the guiding rod (924) and the second rod (922).

8. The frame unit (9) with the locking mechanism (1) as claimed in any one of claims 5-7, wherein the base (2) has a slit (213) for accommodating the guiding rod (924).

9. The frame unit (9) with the locking mechanism (1) as claimed in any one of claims 5-8, wherein the slide (5) has a tunnel (511) for accommodating the guiding rod (924).

10. The frame unit (9) with the locking mechanism (1) as claimed in any one of claims 1-9, wherein the frame unit (9) further comprises a rod assembly (92) connecting the first rod (921) and the second rod (922).

11. The frame unit (9) with the locking mechanism (1) as claimed in any one of claims 1-10, wherein the base (2) has at least a slot (24) for accommodating at least the first rod (921).

12. The frame unit (9) with the locking mechanism (1) as claimed in any one of claims 1-11, wherein the slide (5) has at least a flute (54) for accommodating the second rod (922).

## Patentansprüche

1. Rahmeneinheit (9) mit einer Feststellvorrichtung (1), wobei die Rahmeneinheit (9) mindestens eine erste Strebe (921) und mindestens eine zweite Strebe (922) aufweist, wobei die Feststellvorrichtung (1) umfasst:
eine Basis (2), die schwenkbar mit der ersten Strebe (921) der Rahmeneinheit (9) verbunden ist;
ein Schwenkelement (6), das gegenüberliegend zwei Enden, einen Schwenkbereich (64) zwischen den zwei Enden, und einen Vorsprung (62) an einem der beiden Enden aufweist, wobei der Schwenkbereich (64) schwenkbar mit der Basis (2) verbunden ist; und
ein flexibles Element (72), das zwischen dem Schwenkelement (6) und der Basis (2) zum Zurückstellen des Schwenkelements (6) vorgesehen ist;
ein Gleitelement (5), das schwenkbar mit der zweiten Strebe (922) der Rahmeneinheit (9) verbunden ist; und
wobei der Vorsprung (62) zum Feststellen des Gleitelements (5) bereitgestellt wird, um das Gleitelement (5) nahe der Basis (2) zu befestigen und die erste Strebe (921) und die zweite Strebe (922) der Rahmeneinheit (9) in einem aufgespannten Zustand zu halten,
**dadurch gekennzeichnet, dass**
ein Blockierelement (3) in der Basis (2) zum Kontaktieren des Schwenkelements (6) angeordnet ist, um das Schwenkelement (6) an einem Trennen von dem Gleitelement (5) zu hindern;
wobei das Schwenkelement (6), wenn das Blockierelement (3) relativ zu dem Schwenkelement (6) bewegt wird und eine Kraft auf ein Ende des Schwenkelements (6) aufgebracht wird, relativ zu dem Schwenkbereich (64) schwenkend gedreht wird, so dass der Vorsprung (62) des Schwenkelements (6) von dem Gleitelement (5) getrennt wird, um dem Gleitelement (5) zu ermöglichen, sich relativ zu der Basis (2) zu bewegen, welches die Rahmeneinheit (9), die erste Strebe (921) und die zweite Strebe (922) in einen faltbaren Zustand bringt.

2. Rahmeneinheit (9) mit der Feststellvorrichtung (1) nach Anspruch 1, wobei das Blockierelement (3) zwei elastische Arme (33) aufweist, und die Basis (2) zwei geneigte Flächen (233) aufweist, die die zwei elastischen Arme (33) jeweils kontaktieren, um das Blockierelement (3) zurückzustellen.

3. Rahmeneinheit (9) mit der Feststellvorrichtung (1) nach Anspruch 1 oder 2, wobei die Feststellvorrichtung (1) des weiteren ein Beschränkungselement (4) aufweist, und das Blockierelement (3) des Weiteren ein Langloch (321) zum Aufnehmen des Beschränkungselements (4) aufweist, welches das Blockierelement (3) und das flexible Element (72) auf einen Bereich beschränkt.

4. Rahmeneinheit (9) mit der Feststellvorrichtung (1) nach einem der Ansprüche 1-3, wobei die Feststellvorrichtung (1) des Weiteren einen Griff (7) aufweist, der an dem Schwenkelement (6) vorgesehen ist, und wobei der Vorsprung (62) von dem Gleitelement (5) getrennt wird, wenn eine Kraft auf den Griff (7) aufgebracht wird.

5. Rahmeneinheit (9) mit der Feststellvorrichtung (1) nach einem der Ansprüche 1-4, wobei die Rahmeneinheit (9) des Weiteren eine Führungsstrebe (924) umfasst, die mit der Basis (2) zum Führen der Bewegung des Gleitelements (5) verbunden ist.

6. Rahmeneinheit (9) mit der Feststellvorrichtung (1) nach Anspruch 5, wobei die Rahmeneinheit (9) des Weiteren eine Pedalanordnung (93) umfasst, die an einem Ende der Führungsstrebe (924) vorgesehen ist, um ein Aufspannen der Rahmeneinheit (9) zu vereinfachen.

7. Rahmeneinheit (9) mit der Feststellvorrichtung (1) nach Anspruch 5 oder 6, wobei die Rahmeneinheit (9) des Weiteren mindestens eine dritte Strebe (923) zum Verbinden der Führungsstrebe (924) und der zweiten Strebe (922) umfasst.

8. Rahmeneinheit (9) mit der Feststellvorrichtung (1) nach einem der Ansprüche 5-7, wobei die Basis (2) einen Schlitz (213) zum Aufnehmen der Führungsstrebe (924) aufweist.

9. Rahmeneinheit (9) mit der Feststellvorrichtung (1) nach einem der Ansprüche 5-8, wobei das Gleitelement (5) einen Tunnel (511) zum Aufnehmen der Führungsstrebe (924) aufweist.

10. Rahmeneinheit (9) mit der Feststellvorrichtung (1) nach einem der Ansprüche 1-9, wobei die Rahmeneinheit (9) des Weiteren eine Strebenanordnung (92) umfasst, die die erste Strebe (921) und die zweite Strebe (922) verbindet.

11. Rahmeneinheit (9) mit der Feststellvorrichtung (1) nach einem der Ansprüche 1-10, wobei die Basis (2) mindestens eine Aussparung (24) zum Aufnehmen von mindestens der ersten Strebe (921) aufweist.

12. Rahmeneinheit (9) mit der Feststellvorrichtung (1) nach einem der Ansprüche 1-11, wobei das Gleitelement (5) mindestens eine Nut (54) zum Aufnehmen der zweiten Strebe (922) aufweist.

## Revendications

1. Unité de cadre (9) dotée d'un mécanisme de verrouillage (1), l'unité de cadre (9) comportant au moins une barre (921) et au moins une deuxième barre (922), le mécanisme de verrouillage (1) comprenant :
une base (2) raccordée de façon à pouvoir pivoter à la première barre (921) de l'unité de cadre (9) ;
un élément pivotant (6) comportant deux extrémités opposées, une portion pivotante (64) entre les deux extrémités, et une protubérance (62) à l'une des deux extrémités, la portion pivotante (64) se raccordant de manière à pouvoir pivoter à la base (2) ;
un élément flexible (72) prévu entre l'élément pivotant (6) et la base (2) et destiné à ramener l'élément pivotant (6) ;
un coulisseau (5) raccordé de façon à pouvoir pivoter à la deuxième barre (922) de l'unité de cadre (9) ; et
la protubérance (62) étant destinée à verrouiller le coulisseau (5) dé manière à immobiliser le coulisseau (5) près de la base (2) et à maintenir la première barre (921) et la deuxième barre (922) de l'unité de cadre (9) dans un état déployé ;
**caractérisé en ce que**
l'élément de blocage (3) est disposé dans la base (2) pour venir en contact avec l'élément pivotant (6) afin d'empêcher l'élément pivotant (6) de se séparer du coulisseau (5) ;
lorsque l'élément de blocage (3) est déplacé par rapport à l'élément pivotant (6) et qu'une force est exercée à une extrémité de l'élément pivotant (6), l'élément pivotant (6) étant pivoté par rapport à la partie pivotant (64) de sorte que la protubérance (62) de l'élément pivotant (6) est séparée du coulisseau (5) pour permettre au coulisseau (5) de se déplacer par rapport à la base (2), de sorte que l'unité de cadre (9), la première barre (921), et la deuxième barre (922) viennent dans un état repliable.

2. Unité de cadre (9) dotée du mécanisme de verrouillage (1) selon la revendication 1, dans laquelle l'élément de blocage (3) comporte deux bras élastiques (33) et la base (2) possède deux surfaces inclinées (233) venant respectivement en contact avec les deux bras élastiques (33) afin de ramener l'élément de blocage (3).

3. Unité de cadre (9) dotée du mécanisme de verrouillage (1) selon la revendication 1 ou la revendication 2, dans laquelle le mécanisme de verrouillage (1) comporte en outre un élément de limitation (4) et que l'élément de blocage (3) comporte en outre un trou oblong (321) destiné à recevoir l'élément de limitation (4) qui limite l'élément de blocage (3) et l'élément flexible (72) dans une plage.

4. Unité de cadre (9) dotée du mécanisme de verrouillage (1) selon l'une quelconque des revendications 1 à 3, dans laquelle le mécanisme de verrouillage (1) comporte en outre une poignée (7) prévue au niveau de l'élément pivotant (6) et que la protubérance (62) se sépare de la glissière (5) lorsqu'une force est appliquée sur la poignée (7).

5. Unité de cadre (9) dotée du mécanisme de verrouillage (1) selon l'une quelconque des revendications 1 à 4, dans laquelle l'unité de cadre (9) comporte en outre une barre de guidage (924) raccordée à la base (2) afin de guider le déplacement de la glissière (5).

6. Unité de cadre (9) dotée du mécanisme de verrouillage (1) selon la revendication 5, dans laquelle l'unité de cadre (9) comporte en outre un ensemble à pédale (93) prévu à une extrémité de la barre de guidage (924) pour faciliter le déploiement de l'unité de cadre (9).

7. Unité de cadre (9) dotée du mécanisme de verrouillage (1) selon la revendication 5 ou la revendication 6, dans laquelle l'unité de cadre (9) comporte en outre au moins une troisième barre (923) pour raccorder la barre de guidage (924) et la deuxième barre (922).

8. Unité de cadre (9) dotée du mécanisme de verrouillage (1) selon l'une quelconque des revendications 5 à 7, dans laquelle la base (2) comporte une fente (213) destinée à loger la barre de guidage (924).

9. Unité de cadre (9) dotée du mécanisme de verrouillage (1) selon l'une quelconque des revendications 5 à 8, dans laquelle le coulisseau (5) comporte un passage (511) destiné à loger la barre de guidage (924).

10. Unité de cadre (9) dotée du mécanisme de verrouillage (1) selon l'une quelconque des revendications 1 à 9, dans laquelle l'unité de cadre comporte en outre un ensemble de barres (92) raccordant la première barre (912) et la deuxième barre (922).

11. Unité de cadre (9) dotée du mécanisme de verrouillage (1) selon l'une quelconque des revendications 1 à 10, dans laquelle la base (2) comporte au moins une fente (24) destinée à loger au moins la première barre (921).

12. Unité de cadre (9) dotée du mécanisme de verrouillage (1) selon l'une quelconque des revendications 1 à 11, dans laquelle le coulisseau (5) comporte au moins une rainure (54) destinée à loger la deuxième barre (922).
